# EUROPEAN PATENT SPECIFICATION

(11) **EP 2 550 643 B1**
(45) Date of publication and mention of the grant of the patent: **26.02.2020**
(21) Application number: 11705666.3
(22) Date of filing: 04.02.2011
(51) Int. Cl.: G07C 5/08

(54) **DATA LOGGING APPARATUS FOR A VEHICLE**
DATENPROTOKOLLIERGERÄT FÜR EIN FAHRZEUG
APPAREIL DE CONSIGNATION DE DONNÉES POUR UN VÉHICULE

(30) Priority: 23.03.2010 GB 201004790
(43) Date of publication of application: 30.01.2013
(73) Proprietor: Axscend Limited, Folkestone, Kent CT20 2TG (GB)
(72) Inventor: STEER, Timothy, Folkestone Kent CT18 7BL (GB); GAYLARD, Nigel, Downley High Wycombe HP13 5LP (GB)
(74) Representative: Morris, Jonathan Paul
(86) International application number: PCT/GB2011/050194
(87) International publication number: WO 2011/117595

(56) References cited:
- EP-A1- 1 118 965
- WO-A1-01/51326
- DE-A1- 10 018 942
- US-A- 5 999 091
- US-A1- 2002 052 687
- US-A1- 2003 083 815
- US-A1- 2007 239 321

## Description

The present invention relates to data logging apparatus, a vehicle including the data logging apparatus and a method for detecting the presence and / or absence of goods in a vehicle.

In the logistics industry it can be difficult for operators to identify when goods are unloaded from a lorry and delivered to a recipient. It is important for the operator to know when the vehicle becomes available for reuse so to ensure high utilisation of the vehicle. Ideally the operator wants to know immediately when the vehicle has been unloaded so that the vehicle does not sit unused for long periods of time. For logistics companies, it is also important for contractual reasons to identify the point in time at which the carrier's liability ends and the recipient's liability begins in respect of the goods.

This is a particular problem for articulated heavy goods vehicles, for example of the type that include a tractor unit and a trailer, wherein the trailer is detachable from the tractor, and when the trailer is detached from the tractor it is left in an unpowered state. It is relatively common for the lorry to arrive at a facility where the goods are to be delivered, for the driver to be told that the facility is not yet ready to receive the goods and that he will have to park his trailer until the facility is ready. If the period of time is relatively short, the driver can wait with the trailer, unload the goods, complete the necessary paperwork and then leave the premises with the trailer. However, if the facility is unable to receive the goods that day the tractor unit is often decoupled from the trailer for use on another job and the trailer is parked until the facility is ready to receive the goods. In some instances, the trailer can be parked for several days, or longer, until the recipient is ready to receive the goods. Thus the recipient uses the decoupled trailer as a temporary store for the goods until the facility is ready to receive the goods.

At some stage, the recipient will unload the goods from the trailer and take delivery of those goods. However, the recipient does not always inform the operator right away and therefore the trailer may stand for some time after the goods are unloaded, which can affect the utilisation of the trailer. Also, when the recipient has unloaded the goods, he is now responsible for the goods and the carrier's liability has ended. However, the carrier is normally unaware that the goods have been unloaded from the trailer. This leaves the carrier vulnerable to an unscrupulous recipient who may return goods that were damaged in his facility to the trailer and blame the carrier for the damage. The carrier has no way of proving that the goods were unloaded from the vehicle and that the damage took place in the facility.

There is also a need for a carrier to know when a trailer has been loaded. Carriers often leave trailers at a customer's site. The customer loads the trailer and uses it for storage until a driver with a tractor unit arrives. There can be a delay between goods being loaded on to the trailer and the arrival of the driver because the customer has not promptly informed the carrier that the trailer is ready.

Known data logging systems are disclosed in EP1118965 and DE10018942.

Thus there is a need for apparatus and a method for determining when goods are loaded and unloaded from vehicles, in particular but not exclusively, to heavy goods trailers that can be decoupled from tractor units. Accordingly the invention seeks to provide data logging apparatus, a vehicle including the data logging apparatus and a method for detecting the presence and / or absence of goods in a vehicle that mitigates at least one of the aforementioned problems, or at least provides an alternative to known apparatus and methods.

According to the one aspect of the invention there is provided a vehicle for transporting goods according to claim 1.

By independent power source, it is meant a power source that is independent of the vehicle power source such as an engine or a battery used to power the vehicle electrical systems. Advantageously the independent power source enables the data logging apparatus to power up at least that part of the electronic braking system that is required in order for the processing device to obtain the sensor data when the vehicle power source is not available. For example, for articulated heavy goods vehicles comprising a trailer unit and a tractor unit, the data logging apparatus can obtain sensor data from the weight sensor(s) when the trailer unit is decoupled from the tractor unit and therefore does not receive power from the tractor unit. Typically, trailer units do not have a power source that is arranged to power the onboard electrical systems when the tractor unit is decoupled.

By an output signal that is indicative of the weight of goods stored in the vehicle, it is meant any sensor signal obtained from the braking system from which the weight of the goods in the vehicle can be determined. That is, the signal can represent the weight of goods indirectly by relating to a parameter that varies with load. For example, the sensor data can relate to fluid pressure in a vehicle system such as a suspension system, and the senor can comprise at least one pressure sensor. Any other braking system sensor that monitors directly or indirectly the weight of goods in the vehicle can be used. Advantageously the processing device can be arranged to convert the sensor data into weight data using appropriate algorithms. In some embodiments, the sensor data is indicative of the weight of the goods and at least part of the weight of the vehicle and the processing device is programmed to determine the weight of the goods from that type of data. In some embodiments, a braking system electronic control unit converts the sensor data into weight data that is indicative of the weight of the goods and at least part of the weight of the vehicle, and the processing device is programmed to determine the weight of the goods from that type of data. In some embodiments, the sensor data is processed by a remote computer.

The processing device is arranged to store sensor data in the memory means. This can be in its substantially unprocessed, partially processed and / or processed forms. By processed it is meant in a form wherein it is converted to weight data. Partially processed relates to any intermediate data generated.

The system is very efficient because it utilises existing vehicle sensors and provides carriers with useful information regarding the goods being carried. The sensor data can be used by carriers to determine: if the correct quantity of goods has been loaded on to a vehicle; whether the vehicle has been overloaded, for example it is possible to identify when a customer has overloaded a trailer prior to sending a tractor unit to collect it; that none of the goods are unloaded on route; and to identify when the goods have been removed from the vehicle. Knowing when goods have been removed from a vehicle is important to operators so that they can determine when a vehicle has become available for use and, in the case of courier firms, to determine when the goods have been delivered to a client, so that they can determine when their responsibility, and hence legal liability, for the goods ceases.

Advantageously the processing device can be arranged to automatically obtain sensor data on the basis of a duty cycle. This enables data to be received from the weight sensor(s) on the basis of a predetermined schedule, and at other times the data logging apparatus can be in a low energy sleep mode. For example, the data can be obtained periodically, say every 1 to 30 minutes, preferably every 1 to 10 minutes, and more preferably still every 5 minutes, by powering up the data logging apparatus at the appropriate time from the sleep mode. This provides frequent data while retaining a reasonable battery life. The processing device checks to see if the electronic braking system is powered up by the vehicle power system, if it is, it obtains data from the sensor(s) by communicating with a braking system electronic control unit. If the braking system is not powered up, the processing device activates the apparatus' independent power supply which supplies power to the braking system to enable the processing device to obtain weight data from the electronic control unit. The duty cycle can be arranged such that the frequency of measurement is different for different times of the day, for example the frequency of measurements taken during daylight hours may be greater than the frequency of measurements taken at night time. The purpose of the duty cycle is to reduce the demand on the independent power source thereby saving power and providing an extended period of usage.

Preferably the independent power source includes at least one cell. Advantageously, the cell can be a rechargeable cell. The power source can be connected to power sourced from the vehicle such as the vehicle electrical system, so that the independent power source can be recharged when power is available.

Advantageously the apparatus includes a data link for providing data to a remote computer device. The data link can comprise any suitable radio link for wireless communication. Typically, the data is initially stored in the memory means and is sent to the remote computer device when a suitable signal is available. The data can be automatically transmitted substantially immediately after receipt, or at a predetermined period of time after the data has been recorded. The data link can include a telecommunications device for transmitting data across a cellular telephone network. For example, the telecommunications device may be a GPRS link or a short-message-service (SMS) depending on the quantity of data being transmitted.

Advantageously the apparatus can include interface means for interfacing the apparatus with the electronic braking system, said interface means including a data link for connecting the processing device to a braking system diagnostic port. This enables the apparatus to be easily retrofitted to existing vehicles.

Preferably the memory means includes non-volatile memory.

Advantageously the apparatus can include a positioning system, wherein the processing device is arranged to communicate with the positioning system and to record data relating to the position of the vehicle when the sensor data is obtained. Advantageously the position data can be transmitted to the remote computer device with the sensor data, time and/or date data. Preferably the positioning system comprises a GPS system, however any other suitable positioning system can be used.

The vehicle can comprise a heavy goods vehicle, and may include a trailer unit and a tractor unit, wherein the trailer unit is detachable from the tractor unit, and the electronic braking system is located in the trailer unit.

Advantageously the processing device is arranged to communicate with the electronic control unit to obtain the sensor data.

According to another aspect of the invention there is provided a method for logging data from a vehicle according to claim 10.

Advantageously the method can include obtaining data from the sensor(s) on the basis of a duty cycle.

Advantageously the method can include transmitting the received sensor data, and the time and/or data to a remote computer device via a data link, for example using a telecommunications device for transmitting the data across a cellular telephone network.

The vehicle used in the method can include a tractor unit and a detachable trailer unit, and the electronic braking system is arranged to brake the trailer unit. Advantageously the method can include locating the independent power source on the trailer unit and the method includes obtaining sensor data from the sensor(s) when the trailer unit is decoupled from the tractor unit.

The method can include determining the position of the vehicle when the sensor data is received from electronic braking system using a positioning system, and recording the position data. The method can include sending the position data to a remote computer device using the data link.

Advantageously the data logging apparatus can include a telecommunications device for transmitting data to a remote computer device.

The data logging apparatus can include a data link for connecting the processing device to the electronic braking system diagnostic port. This enables the data logging apparatus to be retrofitted to existing lorries. Of course the apparatus can be built into the electrical systems of new trailer units and therefore the data link for the diagnostic port is replaced with a permanent wire connection.

The data logging apparatus can include a positioning system.

The method can include the apparatus entering a low energy state after the data has been received and / or powering down the electronic braking system after the data has been received.

According to another aspect of the invention there is provided a method for obtaining data from an electronic braking system in a heavy goods trailer when decoupled from a tractor unit using apparatus according to any configuration described herein.

According to another aspect of the invention there is provided a method for determining the presence and/or absence of goods in a vehicle by logging vehicle data according to any method described herein and determining the presence and/or absence of goods by analysing the sensor data. The analysis of the sensor data can be performed automatically and/or manually.

An embodiment of the invention will now be described by way of example, with reference to the accompanying drawings, wherein:
Figure 1 is a schematic view of an embodiment of the invention; and
Figure 2 is a flow diagram showing steps in the method of operation of the embodiment of Figure 1.

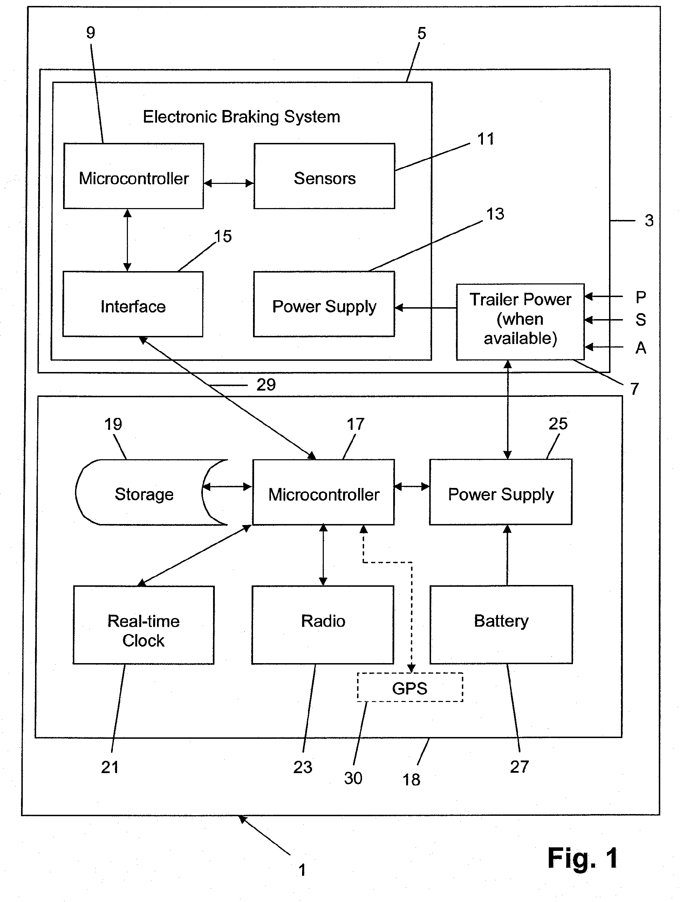

Figure 1 shows a trailer unit 1 for an articulated lorry, said trailer unit 1 having a CANbus 3, an Electronic Braking System (EBS) 5 and a power supply unit 7 that receives power from a tractor unit (not shown) when coupled thereto via at least one of the following: a primary power lead (ISO7638 lead) P, a secondary lead (ISO1185 lead) S and an auxiliary power lead A.

The EBS system 5 includes an electronic control unit 9, a sensor system 11, a power supply 13 which is powered by the trailer power supply unit 7 and a diagnostics port 15 that enables external systems to interface with the electronic control unit 9 and to obtain data from the EBS 5.

The EBS system 5 uses the electronic control unit 9 in order to determine the braking load that should be applied to the wheels of the trailer when the driver applies pressure to the brake pedal in the tractor unit. The electronic control unit 9 is programmed to calculate the appropriate braking force based on the driving conditions, which are in part determined by inputs received from the sensor system 11. The sensor system 11 includes an arrangement of pressure sensors 11 that inform the electronic control unit 9 of the pressure in a trailer suspension system. From this, the electronic control unit 9 can determine the total weight of the vehicle, which includes the load carried by the trailer unit 1. It uses the calculated weight data, or the pressure data directly, to determine the braking load required when the brakes are applied. Thus the electronic control unit 9 adjusts the braking force at least in part according to the magnitude of the load carried.

Figure 1 also shows apparatus 18 in accordance with the invention that is arranged to interface with the EBS system 5 via the diagnostics port 15 in order to obtain data from the sensor system 11, in particular the pressure sensors 11, in order to determine the load carried by the trailer unit 1. The apparatus includes a micro-controller 17, non-volatile memory 19, a real-time clock 21, a telecommunications device 23, a power supply unit 25 and a rechargeable battery 27.

The apparatus 18 is connected to the EBS 5 by a lead 29 that plugs into the diagnostic port 15. The micro-controller 17 is programmed to interface with the EBS system 5 in order to obtain data from the EBS electronic control unit 9. The data comprises output from the pressure sensors 11, or a modified form of that data that has been calculated by the electronic control unit 9 that relates to the weight of the vehicle, and which includes the weight of the goods stored therein. When the micro-controller 17 receives the data, it obtains the time and /or date of receipt of the data from the real-time clock 21. The micro-processor 17 stores the data and the time and / or date of receipt of the weight data in the non-volatile memory 19. Thus the sensor data is "date stamped" for later analysis purposes.

The telephonic device 23 comprises a cellular telephonic connection, and is preferably includes a GPRS link. The micro-processor 17 is programmed to send the sensor data received, the time and /or date to a control centre using the GPRS link. The micro-processor 17 can be programmed to do this as soon as the data is received or at predetermined intervals in order to conserve power, for example when the tractor unit is decoupled from the trailer. When the data is received at the control centre, the operator can analyse the data to determine the status of the delivery. This can be done manually and/or automatically. For example, either the micro-processor 17 and/or a remote computer can be programmed to determine the delivery/loading status from the sensor data and to generate an appropriate message for human reading or for instructing fleet management software.

An important issue for obtaining the weight data from the EBS system 5 is that the EBS system 5 is not powered up when the trailer unit 1 is decoupled from the tractor unit. This is important from a fleet management perspective since it is when the trailer unit 1 is decoupled from the tractor unit that the driver is unlikely to be present to record the time and date when goods are unloaded from the trailer unit 1. The apparatus 18 overcomes this problem since it includes a power supply unit 25, which is separate from the tractor unit power supply, that is arranged to supply power to the EBS 5 in order to power up the electronic control unit 9 and pressure sensors 11 when a data measurement is required and the tractor unit supply is not available. The power supply unit 25 controls the voltage and current supplied to the apparatus 18 and EBS 5 to ensure that they operate correctly. The power supply unit 25 receives power from a rechargeable battery 27. The cell can be recharged by power from the tractor unit when it is available. In order to conserve energy within the battery 27, the micro-controller 17 is programmed to operate on a duty cycle so that data is obtained from the EBS 5 on the basis of a predetermined schedule. For example, the micro-controller 17 can be arranged to obtain data from the EBS 5 periodically, for example every five minutes. Alternatively, the micro-controller 17 can be programmed to adjust the frequency of measurements according to the time of day received from the real-time clock 21. For example, more frequent measurements may be taken during the day than during night time hours. At other times the apparatus 18 is in a low energy mode.

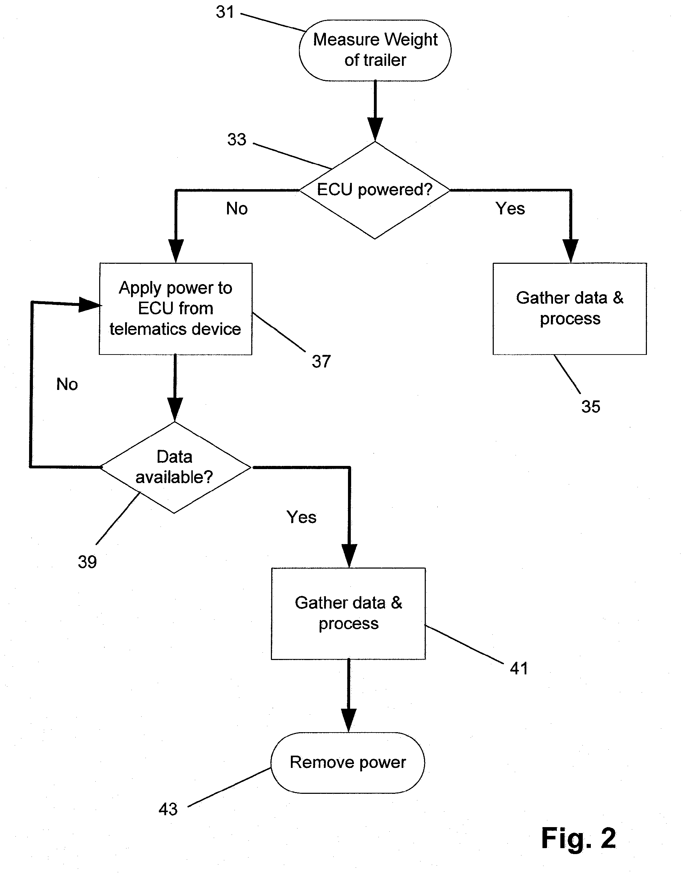

The measurement procedure will now be described with reference to Figure 2. The micro-processor 17 determines that a measurement is required in accordance with the duty cycle. The micro-controller 17 determines 31 whether power is being supplied to the EBS 5, in particular the electronic control unit 9. If so, the micro-controller 17 interrogates 35 the electronic control unit 9 via the diagnostic port 15 in order to obtain weight data from the pressure sensors 11 so that the weight of goods on the trailer can be determined.

If the electronic control unit 9 is not powered up, for example because the trailer unit 1 is uncoupled from the tractor unit, the micro-controller 17 applies power 37 to the electronic control unit 9 by appropriate switching of the power supply unit 25. The micro-controller 17 checks 39 to see whether data is available and if so obtains 41 the data from the electronic control unit 9.

The load on the trailer can be determined from the data received. When the data is obtained from the EBS system 5 the micro-controller 17 "timestamps" the received data with the date and time from the real-time clock 21 and stores the timestamped data in the non-volatile memory 19. The micro-controller 17 can also send the stored data to a remote control centre via the telecommunications device 23. If the telecommunications device 23 does not have an appropriate signal with a cellular telephone network, the data can be stored in the non-volatile memory 19 until a signal is acquired. When the measurements and communications are completed, the micro-controller 17 powers down the apparatus 18 to a standby mode and awaits the signal to perform a new measurement.

The information provided to the remote control centre can be used by the carrier to determine the weight of goods stored in the trailer unit 1 at predetermined times even when the trailer unit 1 is decoupled from the tractor unit. The carrier can determine from this when goods are unloaded from the trailer unit and thus when delivery has been completed. This enables the carrier to determine when his legal responsibility for the goods ends and also enables the carrier to better manage capacity in his fleet of vehicles since he knows much sooner that the trailer unit 1 is now available for reuse. Thus the trailer unit 1 will not stand empty unnecessarily for any significant period of time.

A similar method can be performed in order to determine when goods have been loaded onto a vehicle.

The apparatus 18 can be provided as a standalone unit that can be retrofitted to existing trailers and connected to the EBS 5 using a suitable lead.

Optionally the system can include a Global Position System (GPS) device 30 in order to record the position of the trailer 1 when the weight data was obtained. This data can be store in the non-volatile memory 19 and can be sent to the control centre via the telecommunications device 23.

It will be apparent to the skilled person that modifications can be made to the above embodiment that still fall within the scope of the invention, for example the apparatus 18 can be hardwired into the CANbus 5, for example for new trailers.

The micro-controller 17 can be used to collect data from other sensors contained in the sensor system 11.

Sensors other than pressure sensors can be used in order to determine the weight of the goods carried by the vehicle, for example those that measure stress and / or strain in a component, for example a suspension system component.

While a cellular network type telecommunications device 23 is specified in the embodiment, any other suitable radio communications device can be used for transmitting data to the control centre.

Positioning systems other than GPS can be used.

A clock other than a real-time clock can be used to provide values for time. The real-time can be calculated later from the received values for time, a reference time such as the real-time the clock was started or reset, and if required, a conversion factor. The real-time can be calculated, for example by the micro-controller 17 or an external processor such as a computer at the remote control centre.

## Claims

1. A vehicle (1) for transporting goods, including an electronic braking system (5) and data logging apparatus (18), said data logging apparatus (18) including a processing device (17), memory means (19), an independent power source (25,27), and a clock (21); wherein the electronic braking system (5) includes at least one sensor (11) that produces an output signal that is indicative of the weight of goods stored in the vehicle (1) and an electronic control unit (9) that is arranged to determine the braking load applied to the wheels, said braking load being determined at least in part from signals received from the sensor (11), **characterised in that** the processing device (17) is arranged to communicate with the electronic braking system (5) and, in use, the processing device (17) is arranged to check the power status of the electronic braking system (5), to automatically power up at least the part of the electronic braking system (5) that is required in order for the processing device (17) to obtain the sensor data that is indicative of the weight of goods in the vehicle (1) using the independent power source (25,27) when it determines that the electronic braking system (5) is in an unpowered condition, to obtain sensor data that is indicative of the weight of goods stored in the vehicle (1) from the electronic braking system (5), to obtain the time and/or date of receipt of the data from the clock (21), to store the sensor data in the memory means (19), and to store the time and/or date in the memory means (19).

2. A vehicle according to claim 1, wherein the at least one sensor (11) includes a pressure sensor for monitoring the pressure of a fluid in a vehicle suspension system.

3. A vehicle according to claim 1 or 2, wherein the processing device (17) is arranged to automatically obtain the sensor data on the basis of a duty cycle.

4. A vehicle according to any one of the preceding claims, wherein the data logging apparatus (18) includes a data link (23) for providing data to a remote computer device.

5. A vehicle according to claim 4, wherein the data link (23) includes a telecommunications device (23) for transmitting data across a cellular telephone network.

6. A vehicle according to anyone of the preceding claims, wherein the data logging apparatus (18) includes interface means for interfacing the apparatus with the electronic braking system (5), said interface means including a data link (29) for connecting the processing device (17) to a braking system diagnostic port (15).

7. A vehicle according to anyone of the preceding claims, wherein the data logging apparatus (18) includes a positioning system (30), wherein the processing device (17) is arranged to communicate with the positioning system (30) and to record data relating to the position of the vehicle (1) when the weight data is obtained.

8. A vehicle according to any one of the preceding claims, wherein the vehicle comprises a trailer unit (1) and a tractor unit, wherein the trailer unit (1) is detachable from the tractor unit, and the electronic braking system (5) is arranged to brake the trailer unit (1).

9. A vehicle according to any one of the preceding claims, wherein the electronic control unit (9) is connected to the sensor(s) (11), and the processing device (17) is arranged to communicate with the electronic control unit (9) to obtain the sensor data.

10. A method for logging data from a vehicle (1) including an electronic braking system (5) and a data logging apparatus (18), the apparatus (18) including a processing device (17), memory means (19), a clock (21), and an independent power source (25,27), and the electronic braking system (5) having at least one sensor (11) that produces an output signal that is indicative of the weight of goods stored in the vehicle (1) and an electronic control unit (9) that is arranged to determine the braking load applied to the wheels, said braking load being determined at least in part from signals received from the sensor (11); said method **characterised by** the processing device (17) of the data logging apparatus (18): determining if the electronic braking system (5) is powered up by a vehicle electrical system, and when an unpowered condition is identified, automatically powering up at least part of the electronic braking system (5) that is required in order for the processing device (17) to obtain the sensor data that is indicative of the weight of goods in the vehicle (1) using the independent power source (25,27), obtaining sensor data that is indicative of the weight of goods in the vehicle (1) from the electronic braking system (5), obtaining the date and/or time of receipt of the sensor data, storing the sensor data in memory means (19), and storing the time and/or date in the memory means (19).

11. A method according to claim 10, including automatically obtaining sensor data on the basis of a duty cycle.

12. A method according to claim 10 or 11, including transmitting the received sensor data, time and/or date to a remote computer device via a data link (23).

13. A method according to any one of claims 10 to 12, wherein the vehicle includes a tractor unit and a detachable trailer unit (1), the electronic braking system (5) is arranged to brake the trailer unit (1), and including locating the independent power source (25,27) on the trailer unit (1) and obtaining sensor data when the trailer unit (1) is decoupled from the tractor unit.

14. A method according to any one of claims 10 to 13, wherein the data logging apparatus (18) includes a positioning system (30), the method including determining the position of the vehicle (1) when the weight data is obtained from electronic braking system (5) using the positioning system (30), and recording the position data in the memory means (19).

15. A method according to any one of claims 10 to 14, wherein the data logging apparatus (18) includes a telecommunications device (23) for transmitting data to a remote computer device.

16. A method for obtaining sensor data from at least one sensor (11) in an electronic braking system (5) in a heavy goods trailer (1) when decoupled from a tractor unit using apparatus according to any one of claims 1 to 9.

17. A method for determining the presence and/or absence of goods in a vehicle (1) by logging vehicle data according to any one of claims 10 to 15 and determining the presence and/or absence of goods by analysing the sensor data.

## Patentansprüche

1. Fahrzeug (1) zum Transportieren von Waren, enthaltend ein elektronisches Bremssystem (5) und ein Datenprotokolliergerät (18), wobei das Datenprotolliergerät (18) eine Verarbeitungsvorrichtung (17), Speichermittel (19), eine unabhängige Energiequelle (25, 27) und eine Uhr (21) enthält; wobei das elektronische Bremssystem (5) mindestens einen Sensor (11), der ein Ausgangssignal erzeugt, das das Gewicht von im Fahrzeug (1) gelagerten Waren anzeigt, und eine elektronische Steuereinheit (9), die angeordnet ist, um die an die Räder angelegte Bremslast zu bestimmen, enthält, wobei die Bremslast mindestens teilweise aus vom Sensor (11) empfangenen Signalen bestimmt wird, **dadurch gekennzeichnet, dass** die Verarbeitungsvorrichtung (17) angeordnet ist, um mit dem elektronischen Bremssystem (5) zu kommunizieren, und die Verarbeitungsvorrichtung (17), in Gebrauch, angeordnet ist, um den Energiestatus des elektronischen Bremssystems (5) zu kontrollieren, mindestens den Teil des elektronischen Bremssystems (5), der erforderlich ist, damit die Verarbeitungsvorrichtung (17) die Sensordaten erhält, die das Gewicht von Waren im Fahrzeug (1) anzeigen, mithilfe der unabhängigen Energiequelle (25, 27) automatisch mit Energie zu versorgen, wenn sie bestimmt, dass das elektronische Bremssystem (5) sich in einem energielosen Zustand befindet, Sensordaten, die das Gewicht von im Fahrzeug (1) gelagerten Waren anzeigen, vom elektronischen Bremssystem (5) zu erhalten, die Zeit und/oder das Datum des Empfangs der Daten von der Uhr (21) zu erhalten, die Sensordaten in den Speichermitteln (19) zu speichern und die Zeit und/oder das Datum in den Speichermitteln (19) zu speichern.

2. Fahrzeug nach Anspruch 1, wobei der mindestens eine Sensor (11) einen Drucksensor zur Überwachung des Drucks eines Fluids in einem Fahrzeugaufhängesystem enthält.

3. Fahrzeug nach Anspruch 1 oder 2, wobei die Verarbeitungsvorrichtung (17) angeordnet ist, um die Sensordaten auf der Basis eines Abtastzyklus automatisch zu erhalten.

4. Fahrzeug nach einem der vorangehenden Ansprüche, wobei das Datenprotokolliergerät (18) eine Datenverbindung (23) zum Bereitstellen von Daten an eine entfernte Computervorrichtung enthält.

5. Fahrzeug nach Anspruch 4, wobei die Datenverbindung (23) eine Telekommunikationsvorrichtung (23) zum Übertragen von Daten über ein zelluläres Telefonnetzwerk enthält.

6. Fahrzeug nach einem der vorangehenden Ansprüche, wobei das Datenprotokolliergerät (18) Schnittstellenmittel zur Schnittstellenbildung zwischen dem Gerät und dem elektronischen Bremssystem (5) enthält, wobei die Schnittstellenmittel eine Datenverbindung (29) enthalten, um die Verarbeitungsvorrichtung (17) mit einem Bremssystemdiagnoseanschluss (15) zu verbinden.

7. Fahrzeug nach einem der vorangehenden Ansprüche, wobei das Datenprotokolliergerät (18) ein Positionierungssystem (30) enthält, wobei die Verarbeitungsvorrichtung (17) angeordnet ist, um mit dem Positionierungssystem (30) zu kommunizieren und Daten bezüglich der Position des Fahrzeugs (1) aufzuzeichnen, wenn die Gewichtsdaten erhalten werden.

8. Fahrzeug nach einem der vorangehenden Ansprüche, wobei das Fahrzeug eine Anhängereinheit (1) und eine Zugeinheit umfasst, wobei die Anhängereinheit (1) von der Zugeinheit abnehmbar ist und das elektronische Bremssystem (5) angeordnet ist, um die Anhängereinheit (1) zu bremsen.

9. Fahrzeug nach einem der vorangehenden Ansprüche, wobei die elektronische Steuereinheit (9) mit dem/den Sensor(en) (11) verbunden ist und die Verarbeitungsvorrichtung (17) angeordnet ist, um mit der elektronischen Steuereinheit (9) zu kommunizieren, um die Sensordaten zu erhalten.

10. Verfahren zum Protokollieren von Daten von einem Fahrzeug (1), das ein elektronisches Bremssystem (5) und ein Datenprotokolliergerät (18) enthält, wobei das Gerät (18) eine Verarbeitungsvorrichtung (17), Speichermittel (19), eine Uhr (21) und eine unabhängige Energiequelle (25, 27) enthält und das elektronische Bremssystem (5) mindestens einen Sensor (11), der ein Ausgangssignal erzeugt, das das Gewicht von im Fahrzeug (1) gelagerten Waren anzeigt, und eine elektronische Steuereinheit (9), die angeordnet ist, um die an die Räder angelegte Bremslast zu bestimmen, enthält, wobei die Bremslast mindestens teilweise aus vom Sensor (11) empfangenen Signalen bestimmt wird; wobei das Verfahren **dadurch gekennzeichnet ist, dass** die Verarbeitungsvorrichtung (17) des Datenprotokolliergeräts (18): bestimmt, ob das elektronische Bremssystem (5) durch ein elektrisches System des Fahrzeugs mit Energie versorgt ist, und wenn ein energieloser Zustand identifiziert wird, mindestens den Teil des elektronischen Bremssystems (5), der erforderlich ist, damit die Verarbeitungsvorrichtung (17) die Sensordaten erhält, die das Gewicht von Waren im Fahrzeug (1) anzeigen, mithilfe der unabhängigen Energiequelle (25, 27) automatisch mit Energie versorgt, Sensordaten, die das Gewicht von im Fahrzeug (1) gelagerten Waren anzeigen, vom elektronischen Bremssystem (5) erhält, die Zeit und/oder das Datum des Empfangs der Sensordaten erhält, die Sensordaten in den Speichermitteln (19) speichert und die Zeit und/oder das Datum in den Speichermitteln (19) speichert.

11. Verfahren nach Anspruch 10, enthaltend ein automatisches Erhalten von Sensordaten auf der Basis eines Abtastzyklus.

12. Verfahren nach Anspruch 10 oder 11, enthaltend ein Übertragen der empfangenen Sensordaten, der Zeit und/oder des Datums an eine entfernte Computervorrichtung über eine Datenverbindung (23).

13. Verfahren nach einem der Ansprüche 10 bis 12, wobei das Fahrzeug eine Zugeinheit und eine abnehmbare Anhängereinheit (1) enthält, das elektronische Bremssystem (5) angeordnet ist, um die Anhängereinheit (1) zu bremsen, und enthaltend ein Lokalisieren der unabhängigen Energiequelle (25, 27) auf der Anhängereinheit (1) und ein Erhalten von Sensordaten, wenn die Anhängereinheit (1) von der Zugeinheit entkoppelt wird.

14. Verfahren nach einem der Ansprüche 10 bis 13, wobei das Datenprotokolliergerät (18) ein Positionierungssystem (30) enthält, das Verfahren ein Bestimmen der Position des Fahrzeugs (1), wenn die Gewichtsdaten vom elektronischen Bremssystem (5) mithilfe des Positionierungssystems (30) und ein Aufzeichnen der Positionsdaten in den Speichermitteln (19) enthält.

15. Verfahren nach einem der Ansprüche 10 bis 14, wobei das Datenprotokolliergerät (18) eine Telekommunikationsvorrichtung (23) zum Übertragen von Daten an eine entfernte Computervorrichtung enthält.

16. Verfahren zum Erhalten von Sensordaten von mindestens einem Sensor (11) in einem elektronischen Bremssystem (5) in einem Schwerlastanhänger (1), wenn er von einer Zugeinheit entkoppelt ist, mithilfe einem Gerät nach einem der Ansprüche 1 bis 9.

17. Verfahren zum Bestimmen des Vorhandenseins und/oder der Abwesenheit von Waren in einem Fahrzeug (1) durch Protokollieren von Fahrzeugdaten nach einem der Ansprüche 10 bis 15 und Bestimmen des Vorhandenseins und/oder der Abwesenheit von Waren durch Analysieren der Sensordaten.

## Revendications

1. Véhicule (1) destiné à transporter des marchandises, comprenant un système de freinage électronique (5) et un appareil de consignation de données (18), ledit appareil de consignation de données (18) comprenant un dispositif de traitement (17), un moyen de mémoire (19), une source d'alimentation indépendante (25, 27) et une horloge (21) ; ledit système de freinage électronique (5) comprenant au moins un capteur (11) qui produit un signal de sortie qui indique le poids des marchandises stockées dans le véhicule (1) et une unité de commande électronique (9) qui est agencée pour déterminer la charge de freinage appliquée aux roues, ladite charge de freinage étant déterminée au moins en partie à partir de signaux reçus du capteur (11), **caractérisé en ce que** le dispositif de traitement (17) est agencé pour communiquer avec le système de freinage électronique (5) et, lors de l'utilisation, le dispositif de traitement (17) est agencé pour vérifier l'état d'alimentation du système de freinage électronique (5), pour alimenter automatiquement au moins la partie du système de freinage électronique (5) qui est nécessaire pour que le dispositif de traitement (17) puisse obtenir les données de capteur qui indiquent le poids des marchandises dans le véhicule (1) à l'aide de la source d'alimentation indépendante (25, 27) lorsqu'il détermine que le système de freinage électronique (5) est dans un état non alimenté, pour obtenir des données de capteur indiquant le poids des marchandises stockées dans le véhicule (1) à partir du système de freinage électronique (5), pour obtenir de l'horloge (21) l'heure et/ou la date de réception des données, pour stocker les données de capteur dans le moyen de mémoire (19), et pour stocker l'heure et/ou la date dans le moyen de mémoire (19).

2. Véhicule selon la revendication 1, ledit au moins un capteur (11) comprenant un capteur de pression en vue de surveiller la pression d'un fluide dans un système de suspension de véhicule.

3. Véhicule selon la revendication 1 ou 2, ledit dispositif de traitement (17) étant agencé pour obtenir automatiquement les données de capteur sur la base d'un rapport cyclique.

4. Véhicule selon l'une quelconque des revendications précédentes, ledit appareil de consignation de données (18) comprenant une liaison de données (23) en vue de la fourniture de données à un dispositif informatique distant.

5. Véhicule selon la revendication 4, ladite liaison de données (23) comprenant un dispositif de télécommunications (23) destiné à transmettre des données à travers un réseau téléphonique cellulaire.

6. Véhicule selon l'une quelconque des revendications précédentes, ledit appareil de consignation de données (18) comprenant des moyens d'interface en vue d'interfacer l'appareil avec le système de freinage électronique (5), lesdits moyens d'interface comprenant une liaison de données (29) pour connecter le dispositif de traitement (17) à un port de diagnostic de système de freinage (15).

7. Véhicule selon l'une quelconque des revendications précédentes, ledit appareil de consignation de données (18) comprenant un système de positionnement (30), ledit dispositif de traitement (17) étant agencé pour communiquer avec le système de positionnement (30) et pour enregistrer des données relatives à la position du véhicule (1) lorsque les données de poids sont obtenues.

8. Véhicule selon l'une quelconque des revendications précédentes, ledit véhicule comprenant une unité de remorque (1) et une unité de tracteur, ladite unité de remorque (1) étant détachable de l'unité de tracteur, et ledit système de freinage électronique (5) étant agencé pour freiner l'unité de remorque (1).

9. Véhicule selon l'une quelconque des revendications précédentes, ladite unité de commande électronique (9) étant connectée au(x) capteur(s) (11), et ledit dispositif de traitement (17) étant agencé pour communiquer avec l'unité de commande électronique (9) pour obtenir les données de capteur.

10. Procédé permettant l'enregistrement de données d'un véhicule (1) comprenant un système de freinage électronique (5) et un appareil de consignation de données (18), l'appareil (18) comprenant un dispositif de traitement (17), un moyen de mémoire (19), une horloge (21), et une source d'alimentation indépendante (25, 27), et le système de freinage électronique (5) possédant au moins un capteur (11) qui produit un signal de sortie qui indique le poids des marchandises stockées dans le véhicule (1) et une unité de commande électronique (9) qui est agencée pour déterminer la charge de freinage appliquée aux roues, ladite charge de freinage étant déterminée au moins en partie à partir des signaux reçus en provenance du capteur (11) ; ledit procédé **caractérisé par** le dispositif de traitement (17) de l'appareil de consignation de données (18) : déterminant si le système de freinage électronique (5) est alimenté par un système électrique de véhicule, et lorsqu'une condition de non alimentation est identifiée, alimentant automatiquement au moins une partie du système de freinage électronique (5) qui est nécessaire pour que le dispositif de traitement (17) puisse obtenir les données de capteur qui indiquent le poids des marchandises dans le véhicule (1) à l'aide de la source d'alimentation indépendante (25, 27), obtenant des données de capteur qui indiquent le poids des marchandises dans le véhicule (1) provenant du système de freinage électronique (5), obtenant la date et/ou l'heure de réception des données de capteur, stockant les données de capteur dans un moyen de mémoire (19) et stockant l'heure et/ou la date dans le moyen de mémoire (19).

11. Procédé selon la revendication 10, comprenant l'obtention automatique de données de capteur sur la base d'un rapport cyclique.

12. Procédé selon la revendication 10 ou 11, comprenant la transmission des données de capteur reçues, de l'heure et/ou de la date à un dispositif informatique distant par l'intermédiaire d'une liaison de données (23).

13. Procédé selon l'une quelconque des revendications 10 à 12, ledit véhicule comprenant une unité de tracteur et une unité de remorque amovible (1), ledit système de freinage électronique (5) étant agencé pour freiner l'unité de remorque (1), et comprenant l'emplacement d'une source d'alimentation indépendante (25, 27) sur l'unité de remorque (1) et l'obtention de données de capteur lorsque l'unité de remorque (1) est découplée de l'unité de tracteur.

14. Procédé selon l'une quelconque des revendications 10 à 13, ledit appareil de consignation de données (18) comprenant un système de positionnement (30), le procédé comprenant la détermination de la position du véhicule (1) lorsque les données de poids sont obtenues à partir d'un système de freinage électronique (5) à l'aide du système de positionnement (30) et l'enregistrement des données de position dans le moyen de mémoire (19).

15. Procédé selon l'une quelconque des revendications 10 à 14, ledit appareil de consignation de données (18) comprenant un dispositif de télécommunications (23) destiné à transmettre des données à un dispositif informatique distant.

16. Procédé permettant d'obtenir des données de capteur à partir d'au moins un capteur (11) dans un système de freinage électronique (5) dans une remorque de marchandise de poids lourds (1) lorsqu'elle est découplée d'une unité de tracteur à l'aide d'un appareil selon l'une quelconque des revendications 1 à 9.

17. Procédé permettant de déterminer la présence et/ou l'absence de marchandises dans un véhicule (1) en consignant les données de véhicule selon l'une quelconque des revendications 10 à 15 et de déterminer la présence et/ou l'absence de marchandises en analysant les données de capteur.
